# EUROPEAN PATENT APPLICATION

(11) **EP 4 454 447 A1**
(43) Date of publication of application: **30.10.2024**
(21) Application number: 22910832.9
(22) Date of filing: 02.12.2022
(51) Int. Cl.: A01B 71/02, B60L 15/00, B60L 15/20, A01D 34/64, B60K 17/10, B60K 17/28, B60L 50/60, H02M 7/48

(54) **ELECTRIC WORK VEHICLE**

(30) Priority: 24.12.2021 JP 2021211641
(71) Applicant: Kubota Corporation, Osaka 556-8601 (JP)
(72) Inventor: OKAZAKI, Kazuto, Sakai-shi, Osaka 590-0908 (JP); KAWABATA, Shinichi, Sakai-shi, Osaka 590-0908 (JP); NISHINAKA, Masaaki, Sakai-shi, Osaka 590-0908 (JP); TAKASE, Shunya, Sakai-shi, Osaka 590-0908 (JP)
(74) Representative: Müller-Boré & Partner Patentanwälte PartG mbB
(86) International application number: PCT/JP2022/044544
(87) International publication number: WO 2023/120115

(57) **Abstract**

An electric work vehicle includes a motor control section that controls a motor (M), a power take-off shaft (17, 18) capable of being connected to a work device and capable of transmitting rotational power from the motor (M) to the work device, and a distribution mechanism (20) that distributes rotational power output from the motor (M) to a hydraulic continuously variable transmission (15) and the power take-off shaft (17, 18). The hydraulic continuously variable transmission (15) changes the speed of rotational power input to the hydraulic continuously variable transmission, and outputs the resulting rotational power to a travel device. The motor control section executes maintenance control for maintaining the output rotation speed of the motor (M) at a rotation speed corresponding to a target rotation speed of the power take-off shaft (17, 18). The transmission state of the hydraulic continuously variable transmission (15) can be changed according to manual operation of a speed change operation tool while the maintenance control is executed.

## Description

### Technical Field

The present invention relates to an electric work vehicle that includes a battery, a motor driven by electric power supplied from the battery, and a travel device driven by rotational power output from the motor.

### Background Art

A known example of an electric work vehicle such as that described above is disclosed in Patent Document 1, for example. In this electric work vehicle ("tractor" in Patent Document 1), part of the output of the motor is transmitted to a work device ("tilling device" in Patent Document 1). The work device is driven in this way.

### Prior Art Document

### Patent Document

Patent Document 1: JP 2021-957A

### Disclosure of the Invention

### Problem to be Solved by the Invention

The power transmission structure that transmits output from the motor to the work device is not described in detail in Patent Document 1. Here, the electric work vehicle described in Patent Document 1 can conceivably be provided with a power take-off shaft that can be connected to the work device and can transmit rotational power from the motor to the work device. With this configuration, the work device can be driven by connecting the work device to the power take-off shaft.

However, depending on the configuration of the power transmission structure that transmits the output from the motor to the work device, when the speed of the rotational power transmitted to the travel device is changed in order to change the vehicle speed, the rotation speed of the power take-off shaft may also change.

An object of the present invention is to provide an electric work vehicle that enables changing the vehicle speed while maintaining the rotation speed of the power take-off shaft at a target rotation speed.

### Means for Solving Problem

One aspect of the present invention is an electric work vehicle including: a battery; a motor configured to be driven with electric power supplied from the battery; a travel device configured to be driven with rotational power output from the motor; a motor control section configured to control the motor; a power take-off shaft connectable to a work device and configured to transmit the rotational power from the motor to the work device; and a distribution mechanism configured to distribute the rotational power output from the motor to a hydraulic continuously variable transmission and the power take-off shaft, the hydraulic continuously variable transmission being configured to change a speed of the rotational power input to the hydraulic continuously variable transmission, and output resulting rotational power to the travel device, the motor control section being further configured to execute maintenance control to maintain an output rotation speed of the motor at a rotation speed corresponding to a target rotation speed of the power take-off shaft, and the hydraulic continuously variable transmission having a transmission state changeable according to manual operation of a speed change operation tool while the maintenance control is executed.

According to this configuration, if the speed change operation tool is manually operated while maintenance control is being executed, the speed of the rotational power output from the hydraulic continuously variable transmission to the travel device changes while maintaining the rotation speed of the power take-off shaft at the target rotation speed. As a result, the vehicle speed changes.

In other words, according to this configuration, it is possible to realize an electric work vehicle that enables changing the vehicle speed while maintaining the rotation speed of the power take-off shaft at a target rotation speed.

Also, in the present invention, it is preferable that the hydraulic continuously variable transmission includes a relief mechanism.

According to this configuration, if a relatively large rotational fluctuation (load fluctuation) is transmitted from the travel device to the hydraulic continuously variable transmission due to the influence of the ground state or the like, the shock of the rotational fluctuation is absorbed by hydraulic relief in the relief mechanism. This makes it possible to reduce the shock transmitted to the motor and the like.

Also, in the present invention, it is preferable that the hydraulic continuously variable transmission outputs forward rotational power or reverse rotational power to the travel device according to manual operation of the speed change operation tool, the electric work vehicle travels forward while the travel device is driven by the forward rotational power, and the electric work vehicle travels backward while the travel device is driven by the reverse rotational power.

According to this configuration, it is possible to realize an electric work vehicle that can travel forward and backward without provision of a dedicated mechanism for reversing rotation of the travel device in addition to the hydraulic continuously variable transmission. In other words, an electric work vehicle that can travel forward and backward can be realized with a relatively simple configuration.

Also, in the present invention, it is preferable that the electric work vehicle further includes a rotation operation tool configured to accept an operation to change a rotation state of the power take-off shaft, wherein in a case where (i) the hydraulic continuously variable transmission is in a transmission state in which rotational power is not output from the hydraulic continuously variable transmission, and (ii) the rotation operation tool has been operated in such a manner that the power take-off shaft does not rotate, the motor control section executes reduction control to reduce an output torque of the motor.

According to this configuration, when rotational power is not being output from the hydraulic continuously variable transmission and furthermore the power take-off shaft is not rotating, the output torque of the motor decreases. This makes it possible to suppress battery power consumption while rotational power is not being output from the hydraulic continuously variable transmission and the power take-off shaft is not rotating.

Also, in the present invention, it is preferable that driving of the motor is stopped in the reduction control.

According to this configuration, when rotational power is not being output from the hydraulic continuously variable transmission and furthermore the power take-off shaft is not rotating, the driving of the motor is stopped. This makes it possible for battery power consumption to be lower than in a configuration in which driving of the motor is not stopped when rotational power is not being output from the hydraulic continuously variable transmission and the power take-off shaft is not rotating.

Also, in the present invention, it is preferable that the power take-off shaft is a front power take-off shaft provided in a front section of a body of the electric work vehicle.

According to this configuration, the motive power from the motor can be extracted by the front power take-off shaft, thus making it easy to transmit motive power from the motor to a work device such as a front mower or a snow removal device that is coupled to a front section of the body of the electric work vehicle.

### Brief Description of the Drawings

FIG. 1 is a left side view of a tractor.
FIG. 2 is a left side view showing an arrangement of an inverter and the like.
FIG. 3 is a diagram showing a flow of power transmission.
FIG. 4 is a diagram showing a power transmission mechanism.
FIG. 5 is a partially cutaway left side view showing a configuration of a power transmission shaft and the like.
FIG. 6 is a block diagram showing a configuration of a control section.
FIG. 7 is a hydraulic circuit diagram showing a configuration of a relief mechanism and the like.
FIG. 8 is a flowchart of a reduction control flow.
FIG. 9 is a block diagram showing a configuration of the control section in a first alternative embodiment.
FIG. 10 is a flowchart of the reduction control flow in the first alternative embodiment.
FIG. 11 is a schematic side view of a power transmission device of a tractor in another embodiment (8).
FIG. 12 is a schematic side view showing a power transmission device of a tractor in another embodiment (9).

### Best Mode for Carrying out the Invention

Embodiments of the present invention will be described below based on the drawings. In the following description, unless otherwise stated, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side". Also, the direction of an arrow U and the direction of an arrow D in the drawings will be respectively referred to as "the upper side" and "the lower side".

### Overall Configuration of Tractor

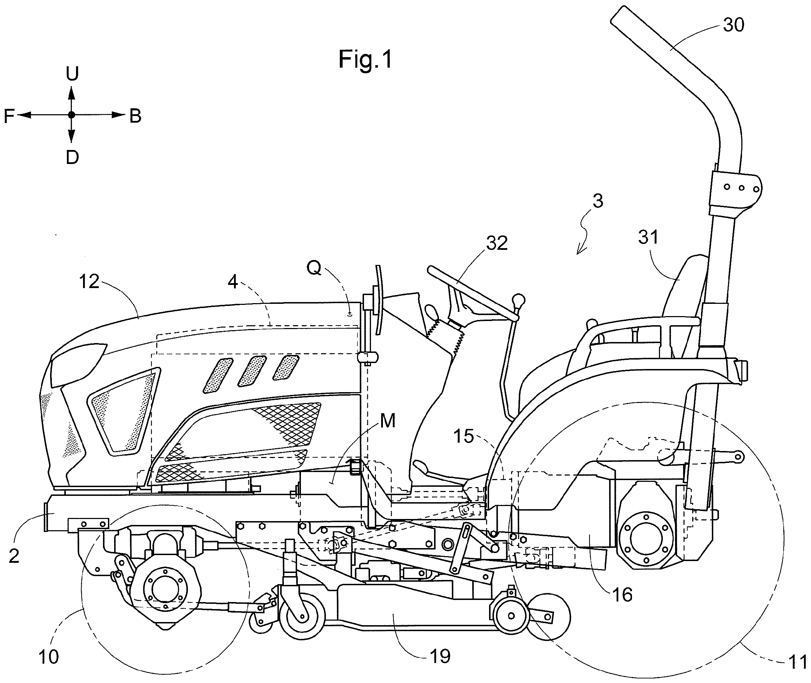

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get on the driving section 3. The operator steers the left and right front wheels 10 by operating the steering wheel 32. The operator can perform various driving operations in the driving section 3.

The tractor includes a battery 4 for traveling. The cover member 12 is configured to be pivotable about an opening/closing axis Q extending in the left-right direction of the body. Accordingly, the cover member 12 is configured to be openable and closable. When the cover member 12 is closed, the battery 4 for traveling is covered by the cover member 12.

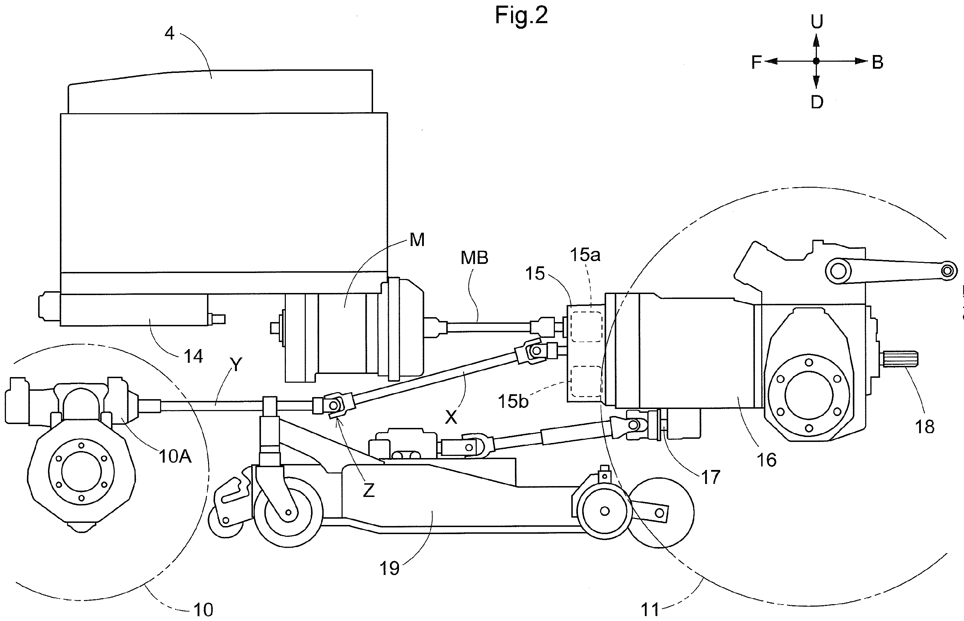

As shown in FIG. 2, the tractor includes an inverter 14 and a motor M. The battery 4 for traveling supplies electric power to the inverter 14. The inverter 14 converts DC power supplied from the battery 4 for traveling to AC power, and supplies the AC power to the motor M. The motor M is driven by the AC power supplied from the inverter 14.

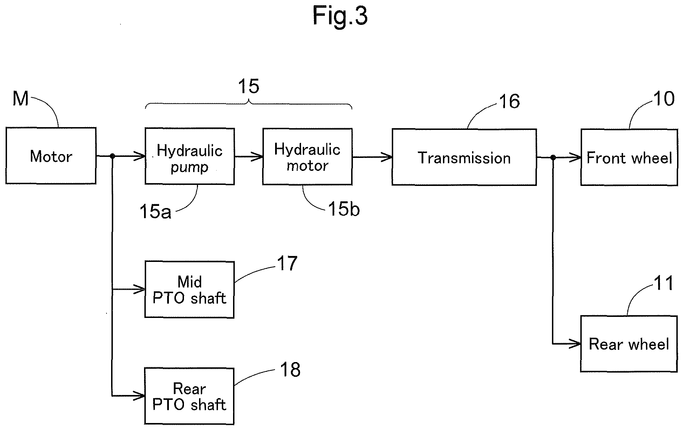

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational power received from the motor M. As a result of the hydraulic pump 15a being driven, rotational power is output from the hydraulic motor 15b. The hydraulic continuously variable transmission 15 is configured to change the speed of rotational power between the hydraulic pump 15a and the hydraulic motor 15b. Also, the hydraulic continuously variable transmission 15 is configured to be capable of changing the transmission ratio in a stepless manner.

The rotational power output from the hydraulic motor 15b is transmitted to the transmission 16. The speed of the rotational power transmitted to the transmission 16 is changed by a gear transmission mechanism included in the transmission 16, and the resulting rotational power is distributed to the left and right front wheels 10 and the left and right rear wheels 11. The left and right front wheels 10 and the left and right rear wheels 11 are driven in this way.

Also, as shown in FIGS. 2 and 3, the tractor includes a mid PTO shaft 17 and a rear PTO shaft 18. The rotational power output from the motor M is distributed to the hydraulic pump 15a, the mid PTO shaft 17, and the rear PTO shaft 18. The mid PTO shaft 17 and the rear PTO shaft 18 thus rotate.

If a work device is connected to the mid PTO shaft 17 or the rear PTO shaft 18, the work device is driven by rotational power from the mid PTO shaft 17 or the rear PTO shaft 18. For example, as shown in FIG. 2, in the present embodiment, a mowing device 19 is connected to the mid PTO shaft 17. The mowing device 19 is driven by rotational power from the mid PTO shaft 17.

According to the above configuration, the tractor of the present embodiment includes the battery 4 for traveling, the motor M driven by electric power supplied from the battery 4 for traveling, and the left and right front wheels 10 and the left and right rear wheels 11 that are driven by rotational power output from the motor M.

Also, this tractor includes the mid PTO shaft 17 and the rear PTO shaft 18 that can each be connected to a work device and can transmit rotational power from the motor M to the work device.

Also, in this tractor, the hydraulic continuously variable transmission 15 changes the speed of the rotational power input to the hydraulic continuously variable transmission 15, and outputs the resulting rotational power to the left and right front wheels 10 and the left and right rear wheels 11.

Note that this tractor corresponds to an "electric work vehicle" according to the present invention. The battery 4 for traveling corresponds to a "battery" according to the present invention. The left and right front wheels 10 and the left and right rear wheels 11 both correspond to a "travel device" according to the present invention. The mid PTO shaft 17 and the rear PTO shaft 18 both correspond to a "power take-off shaft" according to the present invention. The mowing device 19 corresponds to a "work device" according to the present invention.

### Power Transmission Mechanism

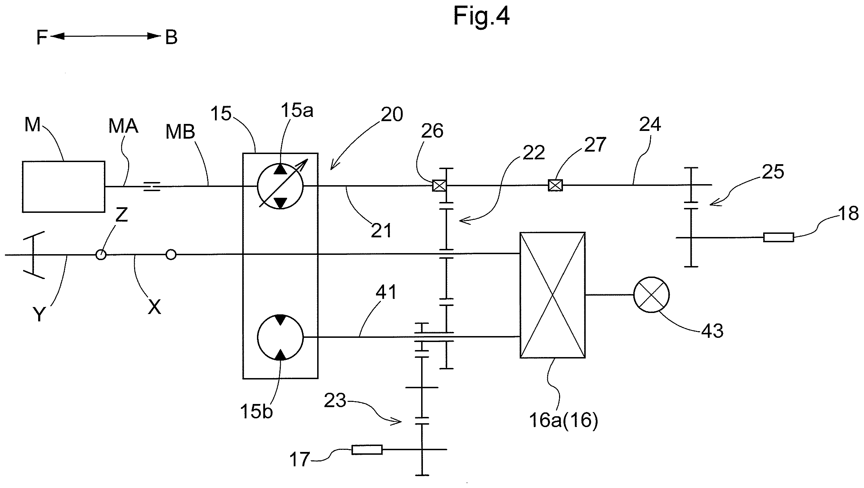

As shown in FIG. 4, the tractor includes a distribution mechanism 20. The distribution mechanism 20 includes a power transmission shaft MB, a first shaft 21, a first gear mechanism 22, a second gear mechanism 23, a second shaft 24, a third gear mechanism 25, a first clutch 26, and a second clutch 27. The first clutch 26 and the second clutch 27 can both be changed between an engaged state in which motive power is transmitted and a disengaged state in which motive power is not transmitted.

An output shaft MA of the motor M is connected to the first shaft 21 via the power transmission shaft MB. The output shaft MA, the power transmission shaft MB, and the first shaft 21 rotate integrally. The first shaft 21 is coupled to the hydraulic pump 15a. When the first clutch 26 is in the engaged state, rotational power is transmitted from the first shaft 21 to the first gear mechanism 22. Furthermore, when the second clutch 27 is in the engaged state, rotational power is transmitted from the first shaft 21 to the second shaft 24.

According to this configuration, rotational power output from the motor M is distributed from the first shaft 21 to the hydraulic pump 15a, the first gear mechanism 22, and the second shaft 24.

The rotational power transmitted to the first gear mechanism 22 is transmitted to the mid PTO shaft 17 via the second gear mechanism 23. The mid PTO shaft 17 thus rotates.

The rotational power transmitted to the second shaft 24 is transmitted to the rear PTO shaft 18 via the third gear mechanism 25. The rear PTO shaft 18 thus rotates.

As described above, the tractor of the present embodiment includes the distribution mechanism 20 that distributes the rotational power output from the motor M to the hydraulic continuously variable transmission 15, the mid PTO shaft 17, and the rear PTO shaft 18.

According to the above configuration, when the motor M is driven to rotate, the mid PTO shaft 17 rotates if the first clutch 26 is in the engaged state, whereas the mid PTO shaft 17 does not rotate if the first clutch 26 is in the disengaged state. Also, when the motor M is driven to rotate, the rear PTO shaft 18 rotates if the second clutch 27 is in the engaged state, whereas the rear PTO shaft 18 does not rotate if the second clutch 27 is in the disengaged state.

The speed of the rotational power transmitted to the hydraulic pump 15a is changed via hydraulic pressure in the hydraulic continuously variable transmission 15, and the resulting rotational power is output from the hydraulic motor 15b. The rotational power output from the hydraulic motor 15b is transmitted via a third shaft 41 to a transmission section 16a, which is a gear transmission mechanism included in the transmission 16. The speed of the rotational power transmitted to the transmission section 16a is changed by the transmission section 16a, and the resulting rotational power is distributed to a power transmission shaft X and a rear wheel differential mechanism 43. The rotational power transmitted to the power transmission shaft X is transmitted to the left and right front wheels 10 via a transmission connection section Z and a power transmission shaft Y. The left and right front wheels 10 are thus driven. The left and right rear wheels 11 are driven by rotational power transmitted to the rear wheel differential mechanism 43.

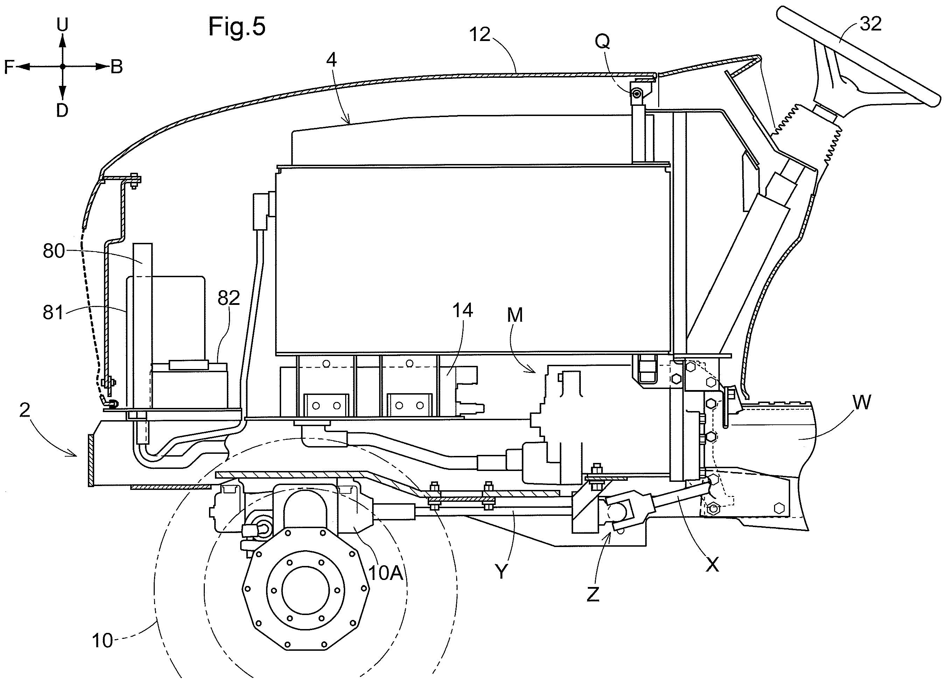

As shown in FIGS. 2 and 5, the power transmission shaft X extends diagonally forward so as to pass between cases W coupled to the hydraulic continuously variable transmission 15 and transmit motive power from the transmission 16. A front wheel input section 10A, to which motive power for the left and right front wheels 10 is input, is arranged at a position lower than the upper end of the power transmission shaft X in the power transmission direction. By employing a configuration in which the power transmission shaft X is connected to the front wheel input section 10A via the transmission connection section Z and the power transmission shaft Y, it is possible to transmit motive power from the upper end of the power transmission shaft X in the power transmission direction to the front wheel input section 10A, which is located at a different height from the upper end. The transmission connection section Z is arranged below the motor M and is surrounded by the body frame 2.

Also, as shown in FIGS. 2 and 5, by arranging the motor M and the hydraulic continuously variable transmission 15 at positions spaced apart from each other and connecting them to each other with the power transmission shaft MB, resonant vibration is less likely to occur. Since the inverter 14 is susceptible to vibration, a structure is employed in which the inverter 14 is connected to the body frame 2, and the battery 4 for traveling is arranged above the inverter 14, thus suppressing vibration in the vicinity of the inverter 14. Also, the inverter 14 is spaced apart from the hydraulic continuously variable transmission 15 to prevent problems caused by vibration.

As shown in FIG. 5, a radiator 80, a DC-DC (Direct Current - Direct Current) converter 81, and an auxiliary battery 82 are arranged in front of the battery 4 for traveling. The radiator 80 and a water pump (not shown) are included in a cooling water path in the tractor. When the water pump pumps cooling water, the cooling water circulates through the cooling water path. The cooling water is cooled by passing through the radiator 80.

Also, electric power is supplied from the battery 4 for traveling to the DC-DC converter 81. The DC-DC converter 81 steps down the voltage of the power from the battery 4 for traveling and supplies the resulting power to the auxiliary battery 82. The auxiliary battery 82 supplies electric power to various auxiliary devices.

### Operation Tools

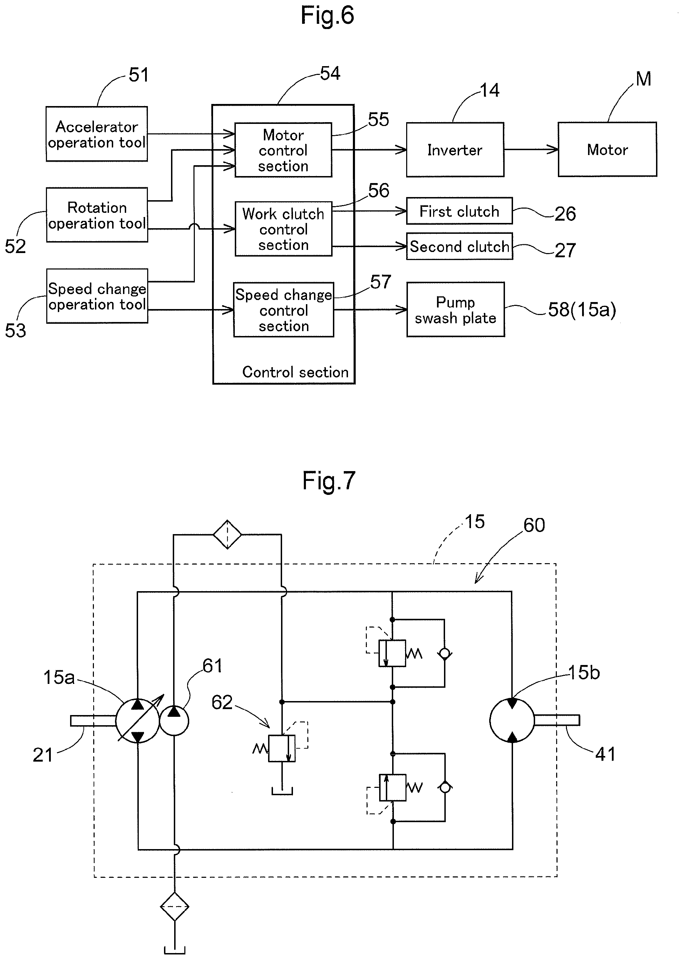

As shown in FIG. 6, the tractor includes an accelerator operation tool 51, a rotation operation tool 52, a speed change operation tool 53, and a control section 54. The accelerator operation tool 51, the rotation operation tool 52, and the speed change operation tool 53 may be levers or buttons, for example, but are not particularly limited to this. Also, the accelerator operation tool 51, the rotation operation tool 52, and the speed change operation tool 53 may be provided in the driving section 3, for example.

The control section 54 includes a motor control section 55, a work clutch control section 56, and a speed change control section 57.

When the accelerator operation tool 51 is manually operated, a signal corresponding to the operation is transmitted to the motor control section 55. The motor control section 55 controls the output rotation speed of motor M by controlling the inverter 14 based on the signal. In other words, the motor control section 55 controls the output rotation speed of the motor M in accordance with a manual operation performed on the accelerator operation tool 51. Also, the accelerator operation tool 51 accepts an operation for changing the output rotation speed of the motor M.

In this way, the tractor of the present embodiment includes the motor control section 55 that controls the motor M.

When the rotation operation tool 52 is manually operated, a signal corresponding to the operation is transmitted to the work clutch control section 56. The work clutch control section 56 controls the engaged/disengaged states of the first clutch 26 and the second clutch 27 based on the signal. The work clutch control section 56 thereby controls the rotation states of the mid PTO shaft 17 and the rear PTO shaft 18. More specifically, the work clutch control section 56 switches the states of the mid PTO shaft 17 and the rear PTO shaft 18 between a rotating state and a non-rotating state.

In other words, the work clutch control section 56 controls the rotation states of the mid PTO shaft 17 and the rear PTO shaft 18 in accordance with a manual operation performed on the rotation operation tool 52. Also, the rotation operation tool 52 accepts an operation for changing the rotation state of the mid PTO shaft 17 and the rear PTO shaft 18.

As described above, the tractor of the present embodiment includes the rotation operation tool 52 that accepts an operation for changing the rotation state of the mid PTO shaft 17 and the rear PTO shaft 18.

When the speed change operation tool 53 is manually operated, a signal corresponding to the operation is transmitted to the speed change control section 57. The speed change control section 57 controls the angle of a pump swash plate 58 of the hydraulic pump 15a based on the signal. When the angle of the pump swash plate 58 changes, the transmission ratio in the hydraulic continuously variable transmission 15 changes. In other words, the speed change control section 57 controls the transmission state of the hydraulic continuously variable transmission 15 in accordance with a manual operation performed on the speed change operation tool 53. Also, the speed change operation tool 53 accepts an operation for changing the transmission state of the hydraulic continuously variable transmission 15.

The hydraulic continuously variable transmission 15 is configured such that when the pump swash plate 58 is in a neutral state, rotational power is not output from the hydraulic motor 15b. Furthermore, the hydraulic continuously variable transmission 15 is configured such that rotational power in the forward direction and the reverse direction can be output to the left and right front wheels 10 and the left and right rear wheels 11 in accordance with the angle of the pump swash plate 58. In other words, the hydraulic continuously variable transmission 15 is configured such that rotational power in the forward direction and the reverse direction can be output to the left and right front wheels 10 and the left and right rear wheels 11 in accordance with a manual operation performed on the speed change operation tool 53.

The tractor of the present embodiment can travel forward by driving the left and right front wheels 10 and the left and right rear wheels 11 with forward rotational power. Also, the tractor of the present embodiment can travel backward by driving the left and right front wheels 10 and the left and right rear wheels 11 with reverse rotational power.

When the tractor of the present embodiment is to perform work while traveling, the operator operates the accelerator operation tool 51 to set the output rotation speed of the motor M to a rotation speed that corresponds to a target rotation speed of the mid PTO shaft 17 or the rear PTO shaft 18. The motor control section 55 is able to maintain the output rotation speed of the motor M at the rotation speed set by the manual operation performed on the accelerator operation tool 51 while the tractor is performing work and traveling.

In other words, the motor control section 55 can perform maintenance control for maintaining the output rotation speed of the motor M at a rotation speed that corresponds to a target rotation speed of the mid PTO shaft 17 or the rear PTO shaft 18.

Furthermore, even while the motor control section 55 is performing maintenance control, the transmission state of the hydraulic continuously variable transmission 15 can be changed by manually operating the speed change operation tool 53. Accordingly, it is possible to change the vehicle speed while maintaining the rotation speed of the mid PTO shaft 17 or the rear PTO shaft 18.

In this way, the transmission state of the hydraulic continuously variable transmission 15 can be changed in accordance with a manual operation performed on the speed change operation tool 53 while maintenance control is being executed.

Note that elements such as the control section 54 and the motor control section 55 included in the control section 54 may be a physical device such as a microcomputer, or may be a functional unit in software.

### Hydraulic System

As shown in FIG. 7, the hydraulic continuously variable transmission 15 includes a hydraulic circuit 60. The hydraulic pump 15a and the hydraulic motor 15b are included in the hydraulic circuit 60. Also, the hydraulic continuously variable transmission 15 includes an oil pump 61 and a relief mechanism 62.

The oil pump 61 is coupled to the first shaft 21. The oil pump 61 is configured to be driven by rotational power from the first shaft 21. The oil pump 61 supplies oil (hydraulic oil) to the hydraulic circuit 60.

Note that the present invention is not limited to this, and the oil pump 61 may be provided outside the hydraulic continuously variable transmission 15. Also, the oil pump 61 may be configured to be driven by rotational power from a member other than the first shaft 21.

The relief mechanism 62 is connected to the hydraulic circuit 60. The relief mechanism 62 is a mechanism that discharges oil (hydraulic oil) in the hydraulic circuit 60 to the outside of the hydraulic circuit 60 in the case where the hydraulic pressure in the hydraulic circuit 60 exceeds a predetermined threshold value. According to this configuration, when the hydraulic pressure in the hydraulic circuit 60 exceeds the predetermined threshold, oil is discharged from the hydraulic circuit 60 via the relief mechanism 62. In this way, the hydraulic continuously variable transmission 15 has the relief mechanism 62.

### Reduction Control

The motor control section 55 shown in FIG. 6 is configured to execute reduction control in the case where the hydraulic continuously variable transmission 15 is in a transmission state in which rotational power is not output from the hydraulic continuously variable transmission 15 and furthermore the rotation operation tool 52 has been operated such that the mid PTO shaft 17 and the rear PTO shaft 18 do not rotate. The reduction control is control for reducing the output torque of the motor M. Also, in the present embodiment, the driving of the motor M is stopped in the reduction control.

In other words, the motor control section 55 executes reduction control for reducing the output torque of the motor M in the case where the hydraulic continuously variable transmission 15 is in a transmission state in which rotational power is not output from the hydraulic continuously variable transmission 15 and furthermore the rotation operation tool 52 has been operated such that the mid PTO shaft 17 and the rear PTO shaft 18 do not rotate.

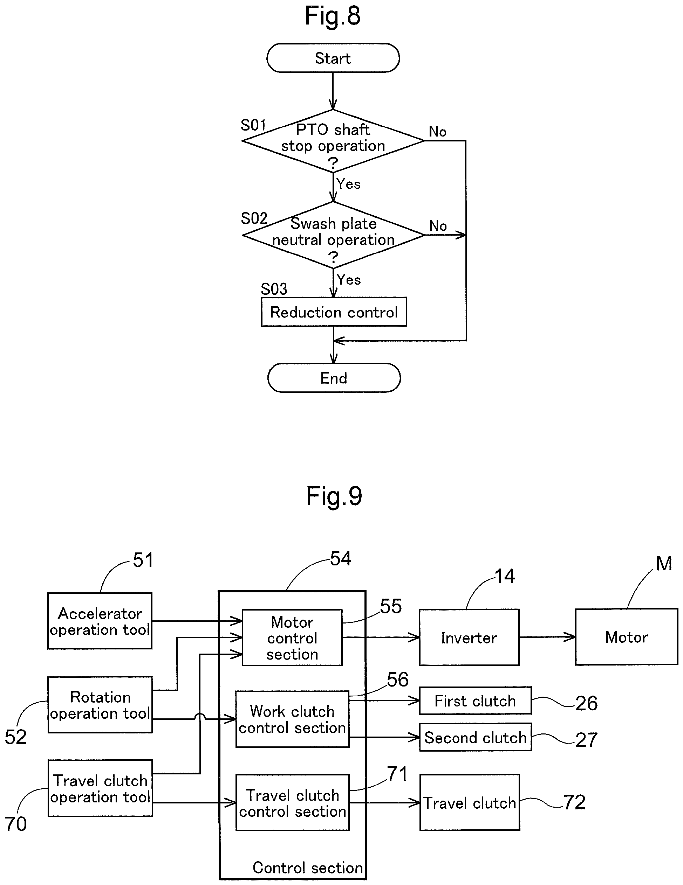

The reduction control will be described below. The motor control section 55 executes the reduction control in accordance with the reduction control flow shown in FIG. 8. This reduction control flow is repeatedly executed at regular intervals while the motor M is driven to rotate.

When this reduction control flow is started, first, the processing of step S01 is executed. In step S01, as shown in FIG. 6, information indicating the operation state of the rotation operation tool 52 is transmitted from the rotation operation tool 52 to the motor control section 55. Based on the information, the motor control section 55 determines whether or not the rotation operation tool 52 has been operated such that the mid PTO shaft 17 and the rear PTO shaft 18 do not rotate.

If the rotation operation tool 52 has not been operated such that the mid PTO shaft 17 and the rear PTO shaft 18 do not rotate ("No" in step S01 of FIG. 8), the reduction control flow ends.

If the rotation operation tool 52 has been operated such that the mid PTO shaft 17 and the rear PTO shaft 18 do not rotate ("Yes" in step S01 of FIG. 8), the processing moves to step S02.

In step S02, as shown in FIG. 6, information indicating the operation state of the speed change operation tool 53 is transmitted from the speed change operation tool 53 to the motor control section 55. Based on the information, the motor control section 55 determines whether or not the hydraulic continuously variable transmission 15 is in a transmission state in which rotational power is not output from the hydraulic continuously variable transmission 15. More specifically, the motor control section 55 determines whether or not the pump swash plate 58 is in the neutral state.

If the pump swash plate 58 is not in the neutral state ("No" in step S02 of FIG. 8), the reduction control flow ends.

If the pump swash plate 58 is in the neutral state ("Yes" in step S02 of FIG. 8), the processing moves to step S03.

In step S03, the above-described reduction control is executed by the motor control section 55. The reduction control flow then ends.

Although the present invention is not particularly limited to this, a configuration is possible in which after the reduction control is executed, the output torque of the motor M is returned to the original value when the hydraulic continuously variable transmission 15 enters a transmission state in which rotational power is output from the hydraulic continuously variable transmission 15, or the output torque of the motor M is returned to the original value when the rotation operation tool 52 is operated such that the mid PTO shaft 17 or the rear PTO shaft 18 rotates, for example. Note that returning the output torque to the original value means returning the output torque to the value before execution of the reduction control.

According to the configuration described above, if the speed change operation tool 53 is manually operated while maintenance control is being executed, the speed of the rotational power output from the hydraulic continuously variable transmission 15 to the left and right front wheels 10 and the left and right rear wheels 11 changes while the rotation speed of the mid PTO shaft 17 or the rear PTO shaft 18 is maintained at the target rotation speed. As a result, the vehicle speed changes.

In other words, according to the configuration described above, it is possible to realize a tractor in which the vehicle speed can be changed while maintaining the rotation speed of the mid PTO shaft 17 or the rear PTO shaft 18 at the target rotation speed.

### First Alternative Embodiment

In the embodiment described above, the hydraulic continuously variable transmission 15 is provided.

However, the present invention is not limited to this. Below, a first alternative embodiment of the present invention will be described, focusing on differences from the above embodiment. Configurations of portions other than the portions described below are similar to those of the above embodiment. Also, configurations similar to those of the above embodiment are denoted by the same reference numerals.

As shown in FIG. 9, in the first alternative embodiment, a travel clutch 72 is provided in place of the hydraulic continuously variable transmission 15. Also, in the first alternative embodiment, a travel clutch operation tool 70 and a travel clutch control section 71 are provided in place of the speed change operation tool 53 and the speed change control section 57. The travel clutch operation tool 70 may be a lever or a button, for example, but is not particularly limited to this. Furthermore, the travel clutch operation tool 70 may be provided in the driving section 3, for example.

The travel clutch 72 can be changed between an engaged state in which power is transmitted and a disengaged state in which power is not transmitted. The power transmission mechanism of the first alternative embodiment is configured such that when the travel clutch 72 is in the engaged state, rotational power is transmitted from the first shaft 21 to the third shaft 41 via the travel clutch 72. When the travel clutch 72 is in the disengaged state, rotational power from the motor M is not transmitted to the left and right front wheels 10 and the left and right rear wheels 11.

When the travel clutch operation tool 70 is manually operated, a signal corresponding to the operation is transmitted to the travel clutch control section 71. The travel clutch control section 71 controls the engaged/disengaged state of the travel clutch 72 based on the signal. In other words, the travel clutch control section 71 controls the engaged/disengaged state of the travel clutch 72 in accordance with a manual operation performed on the travel clutch operation tool 70.

In the first alternative embodiment, the motor control section 55 executes the above-described reduction control in the case where the travel clutch 72 is in the disengaged state and furthermore the rotation operation tool 52 has been operated such that the mid PTO shaft 17 and the rear PTO shaft 18 do not rotate.

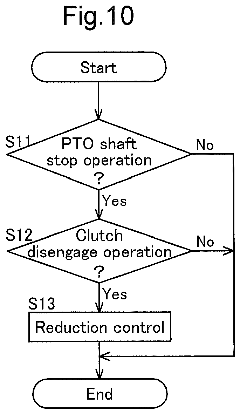

More specifically, the motor control section 55 of the first alternative embodiment executes the reduction control in accordance with the reduction control flow shown in FIG. 10. This reduction control flow is repeatedly executed at regular intervals while the motor M is driven to rotate.

When the reduction control flow is started, first, the processing of step S11 is executed. In step S11, similarly to step S01 in FIG. 8, it is determined whether or not the rotation operation tool 52 has been operated such that the mid PTO shaft 17 and the rear PTO shaft 18 do not rotate.

If the rotation operation tool 52 has not been operated such that the mid PTO shaft 17 and the rear PTO shaft 18 do not rotate ("No" in step S11 of FIG. 10), the reduction control flow ends.

If the rotation operation tool 52 has been operated such that the mid PTO shaft 17 and the rear PTO shaft 18 do not rotate ("Yes" in step S11 of FIG. 10), the processing moves to step S12.

In step S12, as shown in FIG. 9, information indicating the operation state of the travel clutch operation tool 70 is transmitted from the travel clutch operation tool 70 to the motor control section 55. Based on the information, the motor control section 55 determines whether or not the travel clutch 72 is in the disengaged state.

If the travel clutch 72 is not in the disengaged state ("No" in step S12 of FIG. 10), the reduction control flow ends.

If the travel clutch 72 is in the disengaged state ("Yes" in step S12 of FIG. 10), the processing moves to step S13.

In step S13, the motor control section 55 executes the above-described reduction control. The reduction control flow then ends.

### Other Embodiments

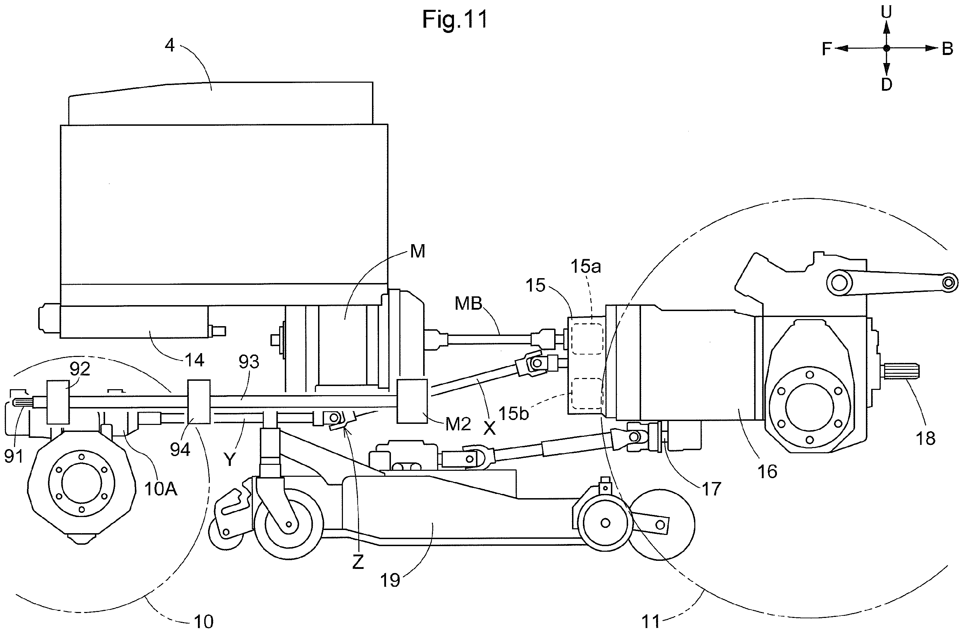

(1) The rotation speed that corresponds to the target rotation speed of the mid PTO shaft 17 or the rear PTO shaft 18 may be determined in advance and not be dependent on manual operation of the accelerator operation tool 51. In this case, the accelerator operation tool 51 may be omitted.
(2) The rotation operation tool 52 may be linked to the first clutch 26 and the second clutch 27 by a mechanical link. In this case, the work clutch control section 56 may be omitted.
(3) The speed change operation tool 53 may be linked to the pump swash plate 58 by a mechanical link. In this case, the speed change control section 57 may be omitted.
(4) The hydraulic continuously variable transmission 15 may be configured such that reverse rotational power cannot be output.
(5) In the reduction control, the driving of the motor M does not need to be stopped.
(6) The motor control section 55 may be configured to not execute reduction control.
(7) Either the mid PTO shaft 17 or the rear PTO shaft 18 may be omitted.
(8) The tractor may be configured as shown in FIG. 11. In the tractor shown in FIG. 11, a first front PTO shaft 91 (corresponding to a "power take-off shaft" and a "front power take-off shaft" according to the present invention) is provided in a front section of the body of the tractor. The first front PTO shaft 91 extracts motive power from the motor M.

Specifically, the first front PTO shaft 91 is rotatably supported by a first support section 92 provided in a front section of the body frame 2. A rear section of the first front PTO shaft 91 is coupled to an output section M2 of the motor M via a rotation shaft 93. The rotation shaft 93 is rotatably supported by a second support section 94 of the body frame 2, between the first support section 92 and the output section M2. Motive power generated by the motor M and output from the output section M2 is transmitted to the first front PTO shaft 91 via the rotation shaft 93.

In this configuration, the first front PTO shaft 91 can be connected to the work device and can transmit rotational power from the motor M to the work device. Also, according to a configuration similar to that of the above embodiment, the motor control section 55 can execute maintenance control for maintaining the output rotation speed of the motor M at a rotation speed corresponding to the target rotation speed of the first front PTO shaft 91. Furthermore, according to a configuration similar to that of the above embodiment, the rotation operation tool 52 accepts an operation for changing the rotation state of the first front PTO shaft 91. Also, according to a configuration similar to that of the above embodiment, the motor control section 55 executes the reduction control for reducing the output torque of the motor M in the case where the hydraulic continuously variable transmission 15 is in a transmission state in which rotational power is not output from the hydraulic continuously variable transmission 15 and furthermore the rotation operation tool 52 has been operated such that the mid PTO shaft 17, the rear PTO shaft 18, and the first front PTO shaft 91 do not rotate.

Furthermore, in this configuration, the output section M2 is included in the previously described distribution mechanism 20. In other words, in this configuration, the distribution mechanism 20 distributes the rotational power output from the motor M to the hydraulic continuously variable transmission 15, the mid PTO shaft 17, the rear PTO shaft 18, and the first front PTO shaft 91.

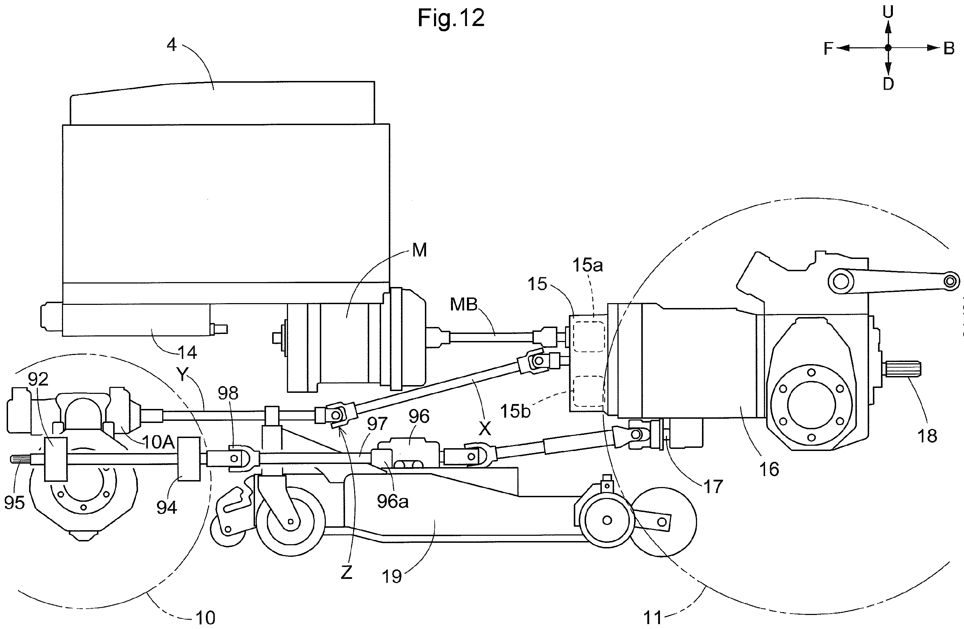

(9) The tractor may be configured as shown in FIG. 12. In the tractor shown in FIG. 12, a second front PTO shaft 95 (corresponding to a "power take-off shaft" and a "front power take-off shaft" according to the present invention) is provided in a front section of the tractor body. The second front PTO shaft 95 extracts motive power from the motor M.

Specifically, the second front PTO shaft 95 is rotatably supported by a first support section 92 provided in a front section of the body frame 2. A rear section of the second front PTO shaft 95 is coupled to a power take-off section 96a, which is provided in an input case 96 of the mowing device 19, via a rotation shaft 97. The rotation shaft 97 is rotatably supported by a second support section 94 of the body frame 2, between the first support section 92 and the power take-off section 96a. A universal joint 98, which serves as a bending section that allows raising and lowering of the mowing device 19, is provided on the rotation shaft 97 at a portion between the second support section 94 and the power take-off section 96a. Motive power output by the motor M is transmitted to the second front PTO shaft 95 via the mid PTO shaft 17, the input case 96, and the rotation shaft 97.

In this configuration, the second front PTO shaft 95 can be connected to the work device and can transmit rotational power from the motor M to the work device. Also, according to a configuration similar to that of the above embodiment, the motor control section 55 can execute maintenance control for maintaining the output rotation speed of the motor M at a rotation speed corresponding to the target rotation speed of the second front PTO shaft 95. Furthermore, according to a configuration similar to that of the above embodiment, the rotation operation tool 52 accepts an operation for changing the rotation state of the second front PTO shaft 95. Also, according to a configuration similar to that of the above embodiment, the motor control section 55 executes the reduction control for reducing the output torque of the motor M in the case where the hydraulic continuously variable transmission 15 is in a transmission state in which rotational power is not output from the hydraulic continuously variable transmission 15 and furthermore the rotation operation tool 52 has been operated such that the mid PTO shaft 17, the rear PTO shaft 18, and the second front PTO shaft 95 do not rotate.

Also, in this configuration, the previously described the distribution mechanism 20 distributes the rotational power output from the motor M to the hydraulic continuously variable transmission 15, to the mid PTO shaft 17 and the second front PTO shaft 95, and to the rear PTO shaft 18. The second front PTO shaft 95 is located downstream of the mid PTO shaft 17 in the flow of motive power transmission.

Note that the configurations disclosed in the above-described embodiments (including the alternative embodiments, which similarly applies hereinafter) can be applied in combination with configurations disclosed in other embodiments as long as no contradiction arises. Also, the embodiments disclosed in this specification are illustrative, and the embodiments of the present invention are not limited to this, and can be modified as appropriate without departing from the object of the present invention.

### Industrial Applicability

The present invention is applicable to not only a tractor but also various electric work vehicles such as a combine, a rice transplanter, and a construction machine.

### Description of Reference Signs

- 4: Battery for travel (battery)
- 10: Front wheel (travel device)
- 11: Rear wheel (travel device)
- 15: Hydraulic continuously variable transmission
- 17: Mid PTO shaft (power take-off shaft)
- 18: Rear PTO shaft (power take-off shaft)
- 19: Mowing device (work device)
- 20: Distribution mechanism
- 52: Rotation operation tool
- 53: Speed change operation tool
- 55: Motor control section
- 62: Relief mechanism
- 91: First front PTO shaft (power take-off shaft, front power take-off shaft)
- 95: Second front PTO shaft (power take-off shaft, front power take-off shaft)
- M: Motor

## Claims

1. An electric work vehicle comprising:
a battery;
a motor configured to be driven with electric power supplied from the battery;
a travel device configured to be driven with rotational power output from the motor;
a motor control section configured to control the motor;
a power take-off shaft connectable to a work device and configured to transmit the rotational power from the motor to the work device; and
a distribution mechanism configured to distribute the rotational power output from the motor to a hydraulic continuously variable transmission and the power take-off shaft,
the hydraulic continuously variable transmission being configured to change a speed of the rotational power input to the hydraulic continuously variable transmission, and output resulting rotational power to the travel device,
the motor control section being further configured to execute maintenance control to maintain an output rotation speed of the motor at a rotation speed corresponding to a target rotation speed of the power take-off shaft, and
the hydraulic continuously variable transmission having a transmission state changeable according to manual operation of a speed change operation tool while the maintenance control is executed.

2. The electric work vehicle according to claim 1,
wherein the hydraulic continuously variable transmission includes a relief mechanism.

3. The electric work vehicle according to claim 1 or 2,
wherein the hydraulic continuously variable transmission outputs forward rotational power or reverse rotational power to the travel device according to manual operation of the speed change operation tool,
the electric work vehicle travels forward while the travel device is driven by the forward rotational power, and
the electric work vehicle travels backward while the travel device is driven by the reverse rotational power.

4. The electric work vehicle according to any one of claims 1 to 3, further comprising:
a rotation operation tool configured to accept an operation to change a rotation state of the power take-off shaft,
wherein in a case where (i) the hydraulic continuously variable transmission is in a transmission state in which rotational power is not output from the hydraulic continuously variable transmission, and (ii) the rotation operation tool has been operated in such a manner that the power take-off shaft does not rotate, the motor control section executes reduction control to reduce an output torque of the motor.

5. The electric work vehicle according to claim 4,
wherein driving of the motor is stopped in the reduction control.

6. The electric work vehicle according to any one of claims 1 to 5,
wherein the power take-off shaft is a front power take-off shaft provided in a front section of a body of the electric work vehicle.
